# EUROPEAN PATENT APPLICATION

(11) **EP 2 517 989 A1**
(43) Date of publication of application: **31.10.2012**
(21) Application number: 11164027.2
(22) Date of filing: 28.04.2011
(51) Int. Cl.: B65G 47/244

(54) **Conveyor and method for turning articles in a cartoning machine.**

(71) Applicant: CAMA 1 SpA, 20124 Milano (IT)
(72) Inventor: Bellante, Daniele, 23846, Garbagnate Monastero (LC) (IT)
(74) Representative: Zardi, Marco

(57) **Abstract**

A conveyor (1) for articles which can be used in a cartoning machine or cartoning line, wherein the articles are turned by 90 degrees around an axis of rotation perpendicular to the conveyance plane (P), between an entry section (2) and an exit section (3) of the conveyor, wherein a thrust cam (10) is positioned between said entry section and said exit section and said cam is synchronised with the advancement of the articles to impart an impulse to the articles in transit and impart at least in part the 90 degrees turning.

## Description

### Field of application

The present invention relates to the field of cartoning (packaging) machines. The invention relates in particular to a conveyor with function of turning 90 degrees the articles around an axis perpendicular to the conveyance plane.

### Prior art

The prior art comprises cartoning machines with assemblies for conveyance of articles capable of imparting to the articles a 90 degrees turn around an axis perpendicular to a conveyance plane. Normally the conveyance plane is horizontal and said axis of rotation is vertical. These assemblies are known as case-turning conveyors.

The need to turn the articles 90 degrees may be imposed by optimisation of transport and/or by the interface with upstream and/or downstream systems. For example a box with a parallelepiped shape and with one dimension considerably larger than another is preferably conveyed with the larger dimension parallel to the direction of advancement; turning 90 degrees may be required in order to close the front and rear flaps in an efficient and fast manner for example with closing systems positioned at the sides of a conveyor track.

Some known turning systems are based mainly on the principle to give different speeds to at least two coplanar portions of an article and produce, as a consequence, a slewing torque. An implementation of this technique, for example, can be obtained with a double belt conveyor comprising two parallel and coplanar belts running at different speeds. An article received by the conveyor has at least a portion in contact with the first belt and a portion in contact with the second belt. Hence at least two coplanar portions of the article assume different forward speeds and the article is made to turn. A conveyor of this type is described for example in US 7 743 905.

Other known systems substantially make use of a fixed obstacle which is in a decentred position relative to the centre of gravity of the articles, the latter moving forward on a conveyor belt or equivalent device. The point of contact between an article and said fixed obstacle in practice acts as a center of rotation.

Said systems operate substantially by the friction between the articles and an underlying conveyor belt or strap. It has been noted that said systems are satisfactory at low working speeds but reveal limitations in high-speed cartoning machines which process a large number of articles per minute.

The turning of the articles cannot in fact exceed a certain speed. The performances of a double belt system are restricted substantially by the friction with the articles and the speed difference cannot exceed a certain limit. The systems based on contact against a fixed obstacle are even less suitable for high production speeds as the product is subject to bouncing with the risk of positioning errors and jamming of the machine.

A slow turning of the article requires the articles to be spaced on the conveyor at a relatively large distance one from the other and/or creates a bottleneck to the speed of the machine, imposing a low transport speed. Another problem is represented by size: the travel during the 90 degree turn is relatively long which causes an increase in the overall size of the machine.

For these reasons the prior art case-turning systems are not satisfactory for applications to the field of high-speed cartoning and the need is felt for a faster and more efficient product turning system.

### Summary of the invention

The invention is aimed to overcome the limits of the prior art and to make available a system for transport and turning 90 degrees of articles in a cartoning machine, designed for high performance in terms of speed and therefore of capacity in pieces / min.

The object is achieved with a conveyor for articles usable in a cartoning machine or cartoning line, wherein said conveyor has a longitudinal direction of transport and defines a conveyance plane, comprising means for imparting a turning of the articles substantially 90 degrees around an axis of rotation perpendicular to said conveyance plane, during the course of the articles between an entry section and an exit section of said conveyor, **characterised in that** it comprises a mobile pusher positioned between said entry section and said exit section and synchronised with the advancement of the articles in the conveyor, so that said mobile pusher imparts an impulse to an article in transit, by means of a direct contact, and deviates said article from an initial longitudinal position to a position wherein the article is turned relative to said axis.

The mobile pusher has the function to divert the articles from an initial longitudinal position. Typically said initial position is a position of approach to one side of the conveyor. Said mobile pusher imparts at least part of the desired 90 degrees rotation. If necessary the rotation can be completed by friction with underlying transport members such as belts or straps, and/or by contact of the article with a fixed obstacle or with a further device of the conveyor. The term impulse refers to a contact of a short duration between the article and the moving pusher.

Said mobile pusher is associated with actuation means synchronised with the conveyance of the articles. The pusher is preferably actuated in continuous rotation with a constant or variable rotation speed.

According to an aspect of the invention said mobile pusher is made with a cam rotating around an axis perpendicular to said conveyance plane. Said rotary cam is preferably shaped to act every half of a revolution and comprises two profiles intended for contact with the articles. The profiles are formed on opposite sides of an axis of symmetry. Other equivalent embodiments of the pusher, for example with a mechanical finger and/or with a reciprocal rather than rotational movement, are possible within the invention.

The mobile pusher is preferably positioned and synchronised to impact an article at a point distanced from the centre of gravity, for example in the front portion or rear portion of the article, so as to generate a momentum of rotation of the same article around a vertical axis perpendicular to the conveyance plane.

More preferably the conveyor comprises at least a further member intended for contact with the articles in transit, termed fulcrum. Said fulcrum is located downstream in relation to the pusher, in the direction of advancement of the articles. Said fulcrum is positioned to rest temporarily against an article at a corner of the article itself, in such a way as to create temporarily a substantially fixed point and facilitate the completion of the 90 degrees rotation of the article around an axis passing through said fixed point. Said fulcrum can be fixed or mobile. A mobile fulcrum is preferably elastically suspended (sprung) above the conveyance plane and in such a way as to deliver a pressure force on the article due to elastic contrast means. Said fulcrum member is preferably a bearing, more preferably a rolling bearing or a roller.

Another aspect of the invention is the related method for turning articles in a cartoning machine. According to the invention a method for turning articles in a cartoning line or machine, during a conveyance phase, comprises the operation of imparting a mechanical impulse to an article in transit, which is in a predefined position between an entry section and an exit section of a conveyor, said impulse imparting at least part of said 90 degrees rotation.

The articles are preferably cardboard boxes or cartons. The rotation may for example be performed after loading the product in said boxes and before an operation of closure. The invention is applicable to the cartoning of various types of product, including food and non-food products.

The product rotation of the invention is faster and better controlled compared to the prior art. The invention does not suffer the disadvantages of above mentioned prior art, and in particular allows: precise positioning of the articles, fast turning without risk of bounces or damage of the product, reduced travel during the turning phase and, therefore, a more compact machine. The performance of a system according to the invention is not in fact limited by the friction with an underlying conveyor belt or strap as instead occurs in the prior art. The invention is therefore effective also at high speeds and/or with lightweight articles, i.e. in conditions where the prior art systems are not satisfactory. The described second contact member, generating a fulcrum point, can advantageously complete the rotation triggered by the pusher and guarantee the correct reaching of the final position with the article transversely rotated (90 degrees) relative to the entry.

The advantages will be more evident with the aid of the following description and drawings, which show non-limiting examples.

### Brief description of the drawings

Fig. 1 is a view of a conveyor for articles forming part of a cartoning machine, according to an embodiment of the invention.
Fig. 2 is a section of the conveyor of Fig. 1.
Fig. 3 is a detail of Fig. 2.
Fig. 4 shows the rotating cam of the conveyor of Fig. 1 and relative motor-transmission assembly, according to a preferred embodiment.
Fig. 5 depicts the conveyor of Fig. 1, with a protective cover which is drawn in an interrupted view, to show the underlying cam.

### Detailed description of the invention

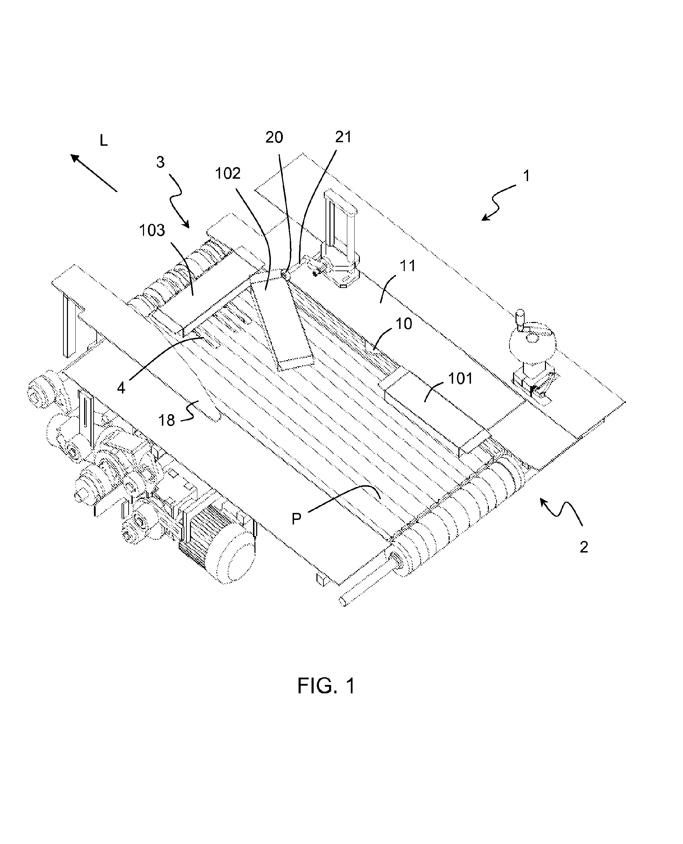

A conveyor for articles (Fig. 1) is generally denoted by 1 and can be part of a cartoning line or machine. The conveyor 1 has a longitudinal conveyance direction L and defines a conveyance plane P.

Fig. 1 shows three successive positions of an article in transit, denoted by reference numerals 101, 102 and 103.

The conveyor 1 extends between an article entry section 2 and an article exit section 3. The entry section 2 receives an article 101 longitudinally arranged and adjacent to one side which in the example is the right side. This side is also defined as "inner side". The exit section 3 delivers the articles to a downstream device which, in the example, is represented by a series of chains 4 provided with so-called transport "flights", according to a per se known technique.

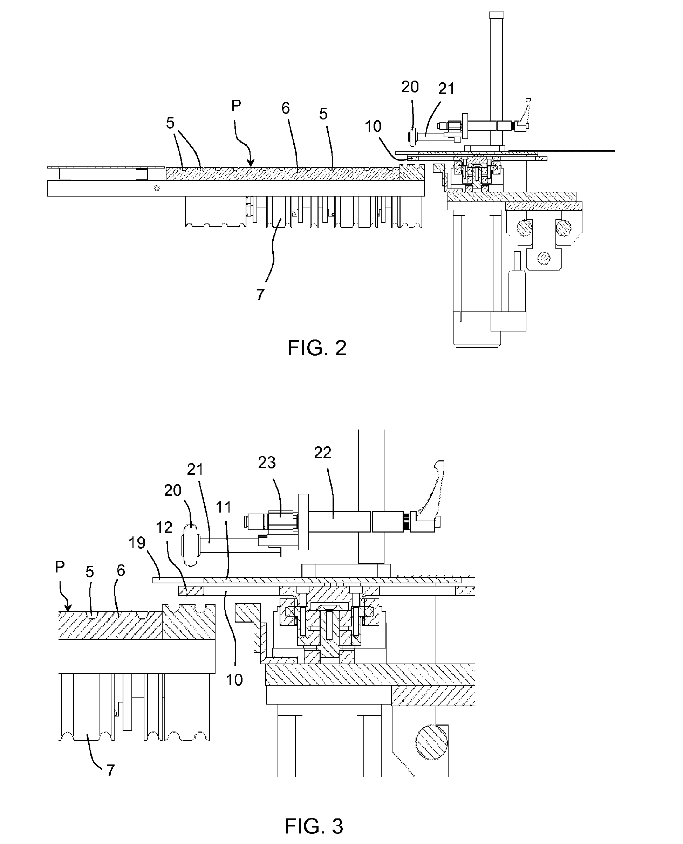

The conveyor 1 comprises a plurality of transport straps 5 partially embedded in a mat 6, which forms said plane P. The straps are driven by pulleys 7 under the mat 6 (Figs. 2-3). This construction is in itself known and therefore is not described in detail. The articles are transported in direction L by friction with said straps 5. Other transport means, suitable for transmitting a forward movement in longitudinal direction L, may be adopted.

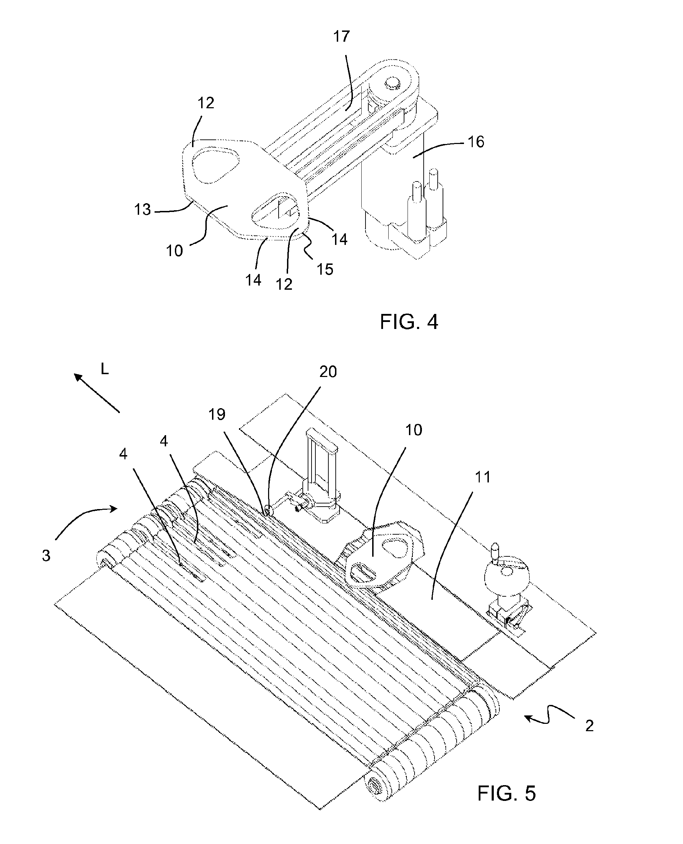

The conveyor 1 comprises a mobile pusher which operates between the sections 2 and 3. In Fig. 1 said pusher is made with a rotary cam 10 which is housed under a protective casing 11. The cam 10 and related motor-drive assembly are shown in Fig. 4. The cam 10 is better seen in Fig. 5 where the protective casing 11 is interrupted.

Said cam 10 rotates around a vertical axis (perpendicular to the plane P) with a speed which can be constant or variable, according to equivalent embodiments of the invention. The rotation of said cam 10 is synchronised with the feed and with the forward motion of the articles in order to hit an article in transit, at the passage in front of the same cam.

A preferred embodiment of the cam 10 is shown in Fig. 4. The cam 10 has an elongated shape, substantially an irregular hexagon with a larger axis and a smaller axis of symmetry. The cam comprises substantially two contact profiles 12 arranged along the larger axis of the hexagon and therefore diametrically opposed by 180°, joined by sides 13. Preferably the profiles 12 have a substantially triangular shape, as shown in Fig. 4, with oblique sides 14 which join in a rounded vertex 15. The rotation of the cam 10 is given by a motor 16 and a pulley and belt drive 17.

The cam 10 acts every half turn, when the vertex 15 of one of the two profiles 12 emerges from the edge of the protective casing 11 as shown in Fig. 1.

The conveyor 1 preferably comprises a second contact member which is located downstream of the cam 10, in the direction of advancement according to longitudinal direction L. In the example this contact member is represented by a bearing or roller 20 elastically suspended on a small support arm 21, provided with a torsional contrast spring 23. The arm 21 swivels through rotation around an axis 22 parallel to the plane P (Fig. 3). The purpose of said bearing 20 is to create a fixed or substantially fixed point on an article 102 in transit, so as to complete the turning of the article triggered by the thrust of the cam 10.

An example of operation is the following. The example refers on a non-limiting basis to boxes with a parallelepiped shape. A box is received from the conveyor 1 with the longer side aligned with the direction L, as denoted by reference numeral 101. The box 101 is initially adjacent to the edge of the protective casing 11 and moves forward in the direction L due to the driving of an underlying strap 5. The cam 10 is synchronised so that one of the profiles 12 can impact the box during the transit of the box in front of the cam itself. Preferably the cam 10 is synchronised to impact the front or rear part of the box, at a point distanced from the centre of gravity, to generate a slewing torque.

Due to the impulse transmitted by the cam 10, the box leaves the early longitudinal position and is arranged crosswise on the conveyor 1 while keeping to move forward in the direction L. Immediately after the contact with the cam 10, the inner front corner of the box (on the side of the casing 11) comes into contact with the bearing 20 which rests on the box, thus creating a substantially fixed fulcrum point. A step 19 of the casing 11 may also be provided at this point (Figs. 3 and 5) to create a stop point for the inner side of the box. The position of the box in this phase is shown as 102.

Due to the inertia and contact with the straps 5, the box 102 tends to rotate in a clockwise direction (seen from above), i.e. the "free" end opposite to the bearing 20 tends to move away from the side defined as inner side. The box thus assumes the position 103, rotated 90 degrees relative to the initial position 101. A fixed guide 18, on the opposite side to the inner side, may contribute to guidance of said free end of the box (Fig. 1).

The box in position 103 is taken by the flights of the chains 4 and conveyed in direction L to a downstream device, for example a closing machine.

The straps 5 can move at the same speed or, according to other embodiments of the invention, the conveyor 1 can comprise straps or groups of straps actuated at different speed. For example the straps away from the side of initial approach can move at a lower or higher speed to assist the turning of the articles.

The invention as described achieves the purpose of high speed and precision of positioning of the articles.

## Claims

1. A conveyor (1) for articles usable in a cartoning machine or line, wherein said conveyor has a longitudinal direction of transport (L) and defines a conveyance plane (P), comprising means for imparting a turning of the articles substantially by 90 degrees around an axis of rotation perpendicular to said conveyance plane, during the course of the articles between an entry section (2) and an exit section (3) of said conveyor, **characterised in that** it comprises a mobile pusher (10) positioned between said entry section and said exit section and synchronised with the advancement of the articles in the conveyor, so that said mobile pusher (10) imparts an impulse to an article in transit, by means of a direct contact, and deviates said article from an initial longitudinal position (101) to a position (102) wherein the article is turned relative to said axis.

2. Conveyor according to claim 1, said mobile pusher being actuated in continuous rotation with constant or variable rotation speed.

3. Conveyor according to claim 2, said mobile pusher being made in the form of a cam (10) rotating around an axis perpendicular to said conveyance plane.

4. Conveyor according to claim 3, said rotating cam (10) comprising two shaped profiles (12) for the contact with the articles in transit, said two profiles being aligned and opposite along an axis of said cam, so that, during the use, one and the other of said shaped profiles alternatively act every half turning of the cam.

5. Conveyor according to any one of the previous claims, comprising a fulcrum member (20) intended for the contact with the articles in transit and located downstream said pusher, in the direction of advancement (L) of the articles, said fulcrum being positioned to rest temporarily against an article substantially at a corner of the article.

6. Conveyor according to claim 5, said fulcrum member being represented by a bearing (20), preferably a roller bearing.

7. Conveyor according to claim 5 or 6, said fulcrum member being suspended elastically above said conveyance plane (P).

8. A machine or line for cartoning articles, comprising a conveyor (1) with turning of the articles by 90 degrees relative to an axis perpendicular to the conveyance plane (P) according to any one of the previous claims.

9. A method for turning articles in a cartoning machine or line, wherein the articles are turned by 90 degrees around an axis perpendicular to a conveyance plane (P), passing from a longitudinal position to a transverse position in relation to a direction of advancement (L), the articles being turned during the transit between an entry section (2) and an exit section (3) of a conveyor (1), the method being **characterised by** imparting a mechanical thrust impulse to an article in transit in a predefined position of a transport course between said entry section and said exit section, said impulse causing at least part of said 90 degrees turning of the article.

10. A method according to claim 9, wherein said impulse is imparted with a rotating cam member (10) synchronised with the phase of feeding articles to the conveyor (1).
